# EUROPEAN PATENT SPECIFICATION

(11) **EP 4 096 404 B1**
(45) Date of publication and mention of the grant of the patent: **27.08.2025**
(21) Application number: 21702914.9
(22) Date of filing: 28.01.2021
(51) Int. Cl.: A01N 43/40, A01P 3/00

(54) **METHODS OF CONTROLLING OR PREVENTING PANAMA DISEASE IN BANANA PLANTS**
VERFAHREN ZUR BEKÄMPFUNG ODER PRÄVENTION DER PANAMA-KRANKHEIT IN BANANENPFLANZEN
PROCÉDÉS DE CONTRÔLE OU DE PRÉVENTION DE LA MALADIE DE PANAMA CHEZ LES BANANIERS

(30) Priority: 30.01.2020 EP 20154534
(43) Date of publication of application: 07.12.2022
(73) Proprietor: Syngenta Crop Protection AG, 4058 Basel (CH)
(72) Inventor: SIEROTZKI, Helge, 4332 Stein (CH)
(74) Representative: HGF
(86) International application number: PCT/EP2021/051949
(87) International publication number: WO 2021/151991

(56) References cited:
- WO-A1-2013/143811
- WO-A1-2015/003951
- WO-A1-2015/128299
- WO-A1-2016/066644
- WO-A1-2019/030307
- WO-A1-2019/057661
- WO-A1-2019/122012
- WO-A1-2019/158476
- WO-A1-2021/063818
- PLOETZ RANDY C ED - ELMER WADE: "Management of Fusarium wilt of banana: A review with special reference to tropical race 4", CROP PROTECTION, ELSEVIER SCIENCE, GB, vol. 73, 31 January 2015 (2015-01-31), pages 7 - 15, XP029230580, ISSN: 0261-2194, DOI: 10.1016/J.CROPRO.2015.01.007
- NEL ET AL: "Evaluation of fungicides and sterilants for potential application in the management of Fusarium wilt of banana", CROP PROTECTION, ELSEVIER SCIENCE, GB, vol. 26, no. 4, 25 January 2007 (2007-01-25), pages 697 - 705, XP005858341, ISSN: 0261-2194, DOI: 10.1016/J.CROPRO.2006.06.008

## Description

### Technical Field

The present invention relates to methods for controlling or preventing Panama disease in banana plants.

### Background

Panama disease is also called Fusarium wilt of bananas. It is the most threatening disease towards banana production. Right after establishment of the "banana industry", in the 1890's, the disease was first observed on the banana cultivar "Gros Michel". During the following 60 years, Fusarium wilt spread quickly throughout the banana producing areas resulting in the death of banana plants despite all efforts undertaken. The identified pathogen for this disease was the fungus *Fusarium oxysporum f.sp. (forma specialis) cubense* (Foc). Relief was brought by the adaptation of a resistant banana cultivar: "Cavendish" in the 50's of the 20th century. Unfortunately, shortly after the introduction of Cavendish, Cavendish clones in Taiwan succumbed again to a new strain of Foc causing Fusarium wilt. The new strain pathogenic on Cavendish is now well-known as Tropical Race 4 (TR4) whereas the Foc strain pathogenic on Gros Michel was called race 1. Recently, Foc TR4 was renamed to *Fusarium odoratissium* (Maryani, Lombard et al., 1992, Stud. Mycol., 155-194). This strain is spreading slowly and reached meanwhile countries in Southeast Asia, Australia, the Middle East, India and into Africa (Ordonez, Seidl et al. 2015, PLoS Pathog, 11(11)). The main vector of Foc TR4 dissemination are humans (Marquardt 2001). Exclusion of the pathogen from new regions should be the most important line of defence, however international trade, travelling of workers, equipment and plant material highly contribute to the rapid global dissemination of this banana pathogen. Unawareness is the bottom line in the local spread. This applies to the behaviour of banana farm personnel, absence of disinfection baths, availability of cleaning facilities for equipment and the transport of infected materials without proper disinfection measurements. Since Foc TR4 is a soilborne disease validated effective management strategies are lacking in order to control the disease. Once established in the soil Foc spores can survive for decades. The pathogen is resistant to common fungicides and until now, its control is limited to phytosanitary measures (Ploetz, R. C. (2015). "Fusarium Wilt of Banana." Phytopathology 105(12): 1512-1521; Nel, B. (2007) "Evaluation of fungicides and sterilants for potential application in the management of Fusarium wilt in banana" Crop Protection 26: 697-705).

Hence, there is a strong need for further treatments against Panama disease. The current invention provides an improved method for controlling or preventing Panama disease in banana plants caused by the phytopathogenic microorganism *Fusarium oxysporum f.sp. (forma specialis) cubense* (Foc), in particular Foc Tropical Race 4, i.e. *Fusarium odoratissium.* Hence, the current invention provides an important means for banana farmers to control or prevent Panama disease.

WO2021/063818 discloses methods for controlling or preventing infestation of a banana plant by phytopathogenic microorganisms of the genus *Pseudocercospora,* in particular *Pseudocercospora fijiensis.*

### Description of the embodiments

*N*-Cyclobutylcarboxamide compounds and processes for their preparation have been disclosed in WO2013/143811 and WO2015/003951. It has now been surprisingly found that particular *N*-cyclobutylcarboxamide compounds disclosed in WO2013/143811 and/or WO2015/003951 are highly effective at controlling or preventing Panama disease in banana plants by the phytopathogenic microorganism *Fusarium oxysporum f.sp. (forma specialis) cubense* (Foc), in particular Foc Tropical Race 4, i.e. *Fusarium odoratissium.* These highly effective compounds thus represent an important new solution for farmers to control or prevent Panama disease in banana plants.

The invention is set out in the appended set of claims.

Described herein as embodiment 1, but not according to the claimed invention, is a method of controlling or preventing infestation of banana plants by the phytopathogenic microorganism *Fusarium oxysporum f.sp. (forma specialis) cubense* (Foc), in particular Foc Tropical Race 4, i.e. *Fusarium odoratissium,* comprising applying to a crop of banana plants or the locus thereof, a compound according to formula (I) 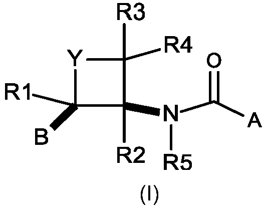 wherein
Y is O, C=O, or CR12R13;
A is a 5- or 6-membered heteroaromatic ring containing 1 to 3 heteroatoms, each independently selected from oxygen, nitrogen and sulphur, or a phenyl ring; the heteroaromatic ring or the phenyl being optionally substituted by one or more R6;
R6 is, independently of each other, halogen, cyano, C1-C4-alkyl, C1-C4-haloalkyl, C1-C4-alkoxy, C1-C4-haloalkoxy, C1-C4-haloalkylthio, C1-C4-alkoxy-C1-4-alkyl or C1-C4-haloalkoxy-C1-C4-alkyl; R1, R2, R3, R4, R12 and R13, independently of each other, are hydrogen, halogen, cyano, C1-C4-alkyl, C1-C4-alkoxy or C1-C4-haloalkyl,
R5 is hydrogen, methoxy or hydroxyl,
B is phenyl substituted by one or more R8,
R8 is, independently of each other, halogen, cyano or a group -L-R9, where each L is independently of each other a bond, -O-, -OC(O)-, -NR7-, -NR7CO-, -NR7S(O)n-, -S(O)n-, -S(O)nNR7-, -COO- or CONR7-,
n is 0, 1 or 2,
R7 is hydrogen, C1-C4-alkyl, C1-C4-haloalkyl, benzyl or phenyl, where benzyl and phenyl is unsubstituted or substituted with halogen, cyano, C1-C4-alkyl or C1-C4-haloalkyl,
R9 is, independently of each other, C1-C6-alkyl, which is unsubstituted or substituted by one or more R10, C3-C6-cycloalkyl, which is unsubstituted or substituted by one or more R10, C6-C14-bicycloalkyl, which is unsubstituted or substituted by one or more R10, C2-C6-alkenyl, which is unsubstituted or substituted by one or more R10, C2-C6-alkynyl, which is unsubstituted or substituted by one or more R10, phenyl, which is unsubstituted or substituted by R10, or heteroaryl, which is unsubstituted or substituted by one or more R10,
R10 is, independently of each other, halogen, cyano, C1-C4-alkyl, C1-C4-haloalkyl, C1-C4-alkoxy, C1-C4-haloalkoxy, C1-C4-alkylthio, C1-C4-haloalkylthio, C3-C6-alkenyloxy, or C3-C6-alkynyloxy;
or a salt or N-oxide thereof;
wherein B and A-CO-NR5 are cis to each other on the four-membered ring,
or a tautomer or stereoisomer of these compounds.

More preferred methods according to embodiment 1 are given in the embodiments below.

As embodiment 2, also not according to the claimed invention, there is provided a method according to embodiment 1 wherein
Y is O or CH2;
A is a 6-membered heteroaromatic ring containing 1 to 2 nitrogen atoms, or a phenyl ring; the heteroaromatic ring or the phenyl being optionally substituted by one or more R6;
R6 is, independently of each other, halogen, cyano, C1-C4-alkyl, C1-C4-haloalkyl, or C1-C4-haloalkoxy;
R1, R2, R3, R4, and R5 are each hydrogen;
B is phenyl substituted by one or more R8;
R8 is, independently of each other, selected from halogen, cyano, C1-C4-alkyl, C1-C4-haloalkyl, C1-C4-haloalkoxy and C3-C6-cycloalkyl.

As embodiment 3, also not according to the claimed invention, there is provided a method according to either embodiment 1 or embodiment 2 wherein A is a 6-membered heteroaromatic ring containing 1 to 2 nitrogen atoms and having 1 to 3 substituents selected from R6, or a phenyl ring having 1 or 3 substitutents selected from R6.

As embodiment 4, also not according to the claimed invention, there is provided a method according to any one of embodiments 1 to 3 wherein B is a phenyl substituted by 1 to 3 substitutents R8.

As embodiment 5, also not according to the claimed invention, there is provided a method according to any one of embodiments 1 to 4 wherein B is a phenyl substituted by 1 to 3 substituents, independently selected from fluoro, chloro, trifluoromethyl, cyclopropyl, difluoromethoxy and trifluoromethoxy;

A is a phenyl, pyridyl or pyrazinyl, which rings, independently of each other, are unsubstituted or substituted by 1 to 3 substituents, independently selected from chloro, bromo, fluoro, methyl, cyano, and trifluoromethyl, Y is O or CH2, and R1, R2, R3, R4 and R5 are each hydrogen.

As embodiment 6, also not according to the claimed invention, there is provided a method according to any one of embodiments 1 to 5 wherein
Y is CH2;
B is a mono or di-halogen substituted phenyl;
A is selected from phenyl, pyrazinyl and pyridyl, each of which is mono or di-substituted by substituents independently selected from halogen and C1-C4-haloalkyl;
R1, R2, R3, R4 and R5 are each hydrogen.

Compounds of fomula (I) as disclosed in any one of embodiments 1 to 6 represent the *cis* racemate: the phenyl ring on the left hand side and the A-C(=O)-NH group on the right hand side are *cis* to each other on the cyclobutyl ring:

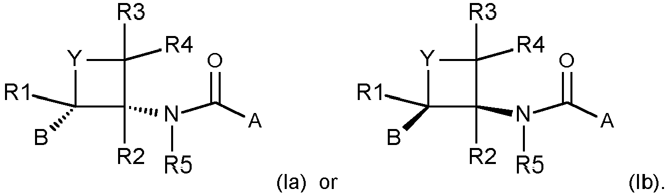

Thus, the racemic compound of formula (I) is a 1:1 mixture of the compounds of formula (la) and (Ib). The wedged bonds shown in the compounds of formula (la) and (Ib) represent absolute stereochemistry, whereas the thick straight bonds such as those shown for the compounds of formula (I) represent relative stereochemistry in racemic compounds.

It has also surprisingly been found that one enantiomer of the compounds of formula (I) is particularly useful in controlling or preventing the infestation of banana plants by the phytopathogenic microorganism Pseudocercospora fijiensis.

Thus, as embodiment 7, also not according to the claimed invention, there is provided the method according to any one of embodiments 1 to 6 wherein the compound is of formula (la)

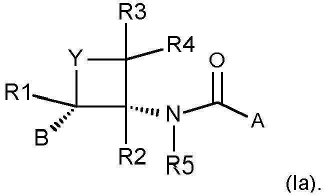

A skilled person is aware that according to the method of embodiment 2, the compound of formula (la) is generally applied as part of a pesticidal composition. Hence, as embodiment 8, also not according to the claimed invention, there is provided a method of controlling or preventing infestation of banana plants by the phytopathogenic microorganism Pseudocercospora fijiensis comprising applying to a crop of banana plants or the locus thereof, a pesticidal composition comprising a compound according to anyone of embodiments 1-7 and one or more formulation adjuvants. As embodiment 9, also not according to the claimed invention, there is provided a method of controlling or preventing infestation of banana plants by the phytopathogenic microorganism Pseudocercospora fijiensis comprising applying to a crop of banana plants or the locus thereof, a pesticidal composition comprising a compound of formula (la) and one or more formulation adjuvants. In a method according to embodiment 9, for pesticidal compositions comprising both a compound of formula (la) and a compound of formula (Ib), the ratio of the compound of formula (la) to its enantiomer (the compound of formula (Ib)) must be greater than 1:1. Preferably, the ratio of the compound of formula (la) to the compound of formula (Ib) is greater than 1.5:1, more preferably greater than 2.5:1, especially greater than 4:1, advantageously greater than 9:1, desirably greater than 20:1, in particular greater than 35:1.

Mixtures containing up to 50%, preferably up to 40%, more preferably up to 30%, especially up to 20%, advantageously up to 10%, desirably up to 5%, in particular up to 3 %, of the *trans* stereoisomers of the compounds of formula (I) (i.e. wherein the B and the A-C(=O)-NH groups are *trans* to each other) are also understood to be part of this invention. Preferably, the ratio of the compound of formula (I) to its *trans* isomer is greater than 1.5:1, more preferably greater than 2.5:1, especially greater than 4:1, advantageously greater than 9:1, desirably greater than 20:1, in particular greater than 35:1.

Preferably, in a composition comprising the compound of formula (la), its *trans* isomer (i.e. wherein the B and the A-CO-NR2 groups are trans to each other) and the compound of formula (Ib), the composition comprises the compound of formula (la) in a concentration of at least 50%, more preferably 70%, even more preferably 85%, in particular over 90%, and particularly preferably over 95%, each based on the total amount of compound of formula (la), its *trans* isomer and the compound of formula (Ib).

Further, as embodiment 10, also not according to the claimed invention, there is provided a method of controlling or preventing infestation of banana plants by the phytopathogenic microorganism Pseudocercospora fijiensis comprising applying to a crop of banana plants or the locus thereof, a compound according to formula (Ic) 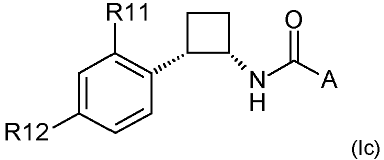 wherein
R11 and R12 are independently selected from halogen;
A is pyridyl which is substituted by one or two substituents independently selected from halogen and C₁-C₄-haloalkyl.

As embodiment 11, also not according to the claimed invention, there is provided a method according to embodiment 10, wherein
R11 and R12 are independently selected from chloro and fluoro;
A is pyrid-2-yl or pyrid-3-yl, which is substituted by one or two C₁-C₄-haloalkyl substituents.

As embodiment 12, also not according to the claimed invention, there is provided a method according to embodiments 10 or 11, wherein

A is selected from 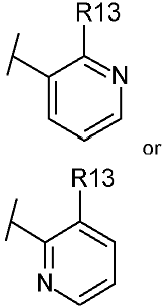 R13 is C₁-C₄-haloalkyl, preferably trifluoromethyl.

As embodiment 13, which is according to the claimed invention, there is provided a method according to any one of embodiments 10 to 12 wherein the compound is selected from any one of compounds 1 to 12 of formula (Ic) 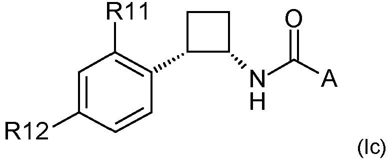 wherein R11, R12 and A are as defined in the following table:

| Compound | A | R11 | R12 |
|---|---|---|---|
| 1 | 2-trifluoromethyl-pyrid-3-yl | Cl | Cl |
| 2 | 3-trifluoromethyl-pyrid-2-yl | Cl | Cl |
| 3 | 3-trifluoromethyl-pyrid-2-yl | F | F |
| 4 | 3-trifluoromethyl-pyrid-2-yl | Cl | F |
| 5 | 3-chloro-pyrid-2-yl | Cl | Cl |
| 6 | 2-methyl-pyrid-3-yl | Cl | Cl |
| 7 | 2-trifluoromethyl-pyrid-3-yl | Cl | F |

As embodiment 14, there is provided the method according to any one of embodiments 1 to 13 comprising the steps
providing a composition comprising a compound as defined in any one of embodiments 1 to 13;
applying the composition to a crop of banana plants or the locus thereof. This embodiment is according to the claimed invention only in as far as it relates to above embodiment 13.

As embodiment 15, there is provided the use of a compound as defined in any one of embodiments 1 to 13 for controlling or preventing infestation of banana plants by phytopathogenic microorganism *Fusarium oxysporum f.sp. (forma specialis) cubense* (Foc), in particular Foc Tropical Race 4, i.e. *Fusarium odoratissium.* This embodiment is according to the claimed invention only in as far as it relates to above embodiment 13.

As embodiment 16, also not according to the claimed invention, there is provided a method for growing banana plants comprising applying or treating banana plants with a compound as defined in any one of claims 1 to 13.

Preferably, the methods and uses according to any one of embodiments 1 to 16 are carried out via drench application.

The preparation of the compounds as defined in the methods of any one of embodiments 1 to 13 has been disclosed in WO2013/143811 and WO2015/003951.

### Definitions:

The term "halogen" represents fluoro, chloro, bromo or iodo, particularly fluoro, chloro or bromo.

The term "alkyl" or "alk" as used herein either alone or as part of a larger group (such as alkoxy, alkylthio, alkoxycarbonyl and alkylcarbonyl) is a straight or branched chain and is, for example, methyl, ethyl, *n*-propyl, *n*-butyl, isopropyl, *sec*-butyl, isobutyl, *tert*-butyl, pentyl, *iso*-pentyl or *n*-hexyl. The alkyl groups are suitably C₁-C₄-alkyl groups.

"Haloalkyl" as used herein are alkyl groups as defined above which are substituted with one or more of the same or different halogen atoms and are, for example, CF₃, CF₂Cl, CF₂H, CCl₂H, FCH₂, ClCH₂, BrCH₂, CH₃CHF, (CH₃)₂CF, CF₃CH₂ or CHF₂CH₂.

The methods and uses according to any one of embodiments 1 to 17 are preferably for controlling or preventing infestation of the crop by the phytopathogenic microorganism *Fusarium oxysporum f.sp. (forma specialis) cubense* (Foc), in particular Foc Tropical Race 4, i.e. *Fusarium odoratissium,* that are resistant to other fungicides. *Fusarium oxysporum f.sp. (forma specialis) cubense* (Foc), in particular Foc Tropical Race 4, i.e. *Fusarium odoratissium,* that are "resistant" to a particular fungicide refer e.g. to strains of cercospora fungi that are less sensitive to that fungicide compared to the expected sensitivity of the same species of *Fusarium oxysporum f.sp. (forma specialis) cubense* (Foc) fungi. The expected sensitivity can be measured using e.g. a strain that has not previously been exposed to the fungicide.

Application according to the methods or uses according to any one of embodiments 1 to 17 is preferably to a crop of banana plants or the locus thereof. Preferably application is to a crop of banana plants. Application of the compounds of the invention can be performed according to any of the usual modes of application, e.g. foliar, drench, soil, in furrow etc. Preferably, the application according to the methods or uses according to any one of embodiments 1 to 17 are carried out via drench application.

The compounds as defined in any one of embodiments 1 to 13 are preferably used in the methods according to any one of embodiments 1 to 17 at 100 to 500 g active ingredient (Al)/ hectare (ha), preferably 150-250 g Al/ha.

The compounds as defined in any one of embodiments 1 to 13 are suitable for use on any banana plant, including those that have been genetically modified to be resistant to active ingredients such as herbicides, or to produce biologically active compounds that control infestation by plant pests.

Generally, a compound as defined in any one of embodiments 1 to 13 is used in the form of a composition (e.g. formulation) containing a carrier. A compound as defined in any one of embodiments 1 to 13 and compositions thereof can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

A formulation typically comprises a liquid or solid carrier and optionally one or more customary formulation auxiliaries, which may be solid or liquid auxiliaries, for example unepoxidized or epoxidized vegetable oils (for example epoxidized coconut oil, rapeseed oil or soya oil), antifoams, for example silicone oil, preservatives, clays, inorganic compounds, viscosity regulators, surfactant, binders and/or tackifiers. The composition may also further comprise a fertilizer, a micronutrient donor or other preparations which influence the growth of banana plants as well as comprising a combination containing the compound of the invention with one or more other biologically active agents, such as bactericides, fungicides, nematicides, plant activators, acaricides, and insecticides.

The compositions are prepared in a manner known per se, in the absence of auxiliaries for example by grinding, screening and/or compressing a solid compound of the present invention and in the presence of at least one auxiliary for example by intimately mixing and/or grinding the compound of the present invention with the auxiliary (auxiliaries). In the case of solid compounds of the invention, the grinding/milling of the compounds is to ensure specific particle size.

Examples of compositions for use in agriculture are emulsifiable concentrates, suspension concentrates, microemulsions, oil dispersibles, directly sprayable or dilutable solutions, spreadable pastes, dilute emulsions, soluble powders, dispersible powders, wettable powders, dusts, granules or encapsulations in polymeric substances, which comprise - at least - a compound as defined in any one embodiments 1 to 13 and the type of composition is to be selected to suit the intended aims and the prevailing circumstances.

As a rule, the compositions comprise 0.1 to 99%, especially 0.1 to 95%, of compound as defined in any one of embodiments 1 to 13 and 1 to 99.9%, especially 5 to 99.9%, of at least one solid or liquid carrier, it being possible as a rule for 0 to 25%, especially 0.1 to 20%, of the composition to be surfactants (% in each case meaning percent by weight). Whereas concentrated compositions tend to be preferred for commercial goods, the end consumer as a rule uses dilute compositions which have substantially lower concentrations of active ingredient.

Examples of foliar formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

Generally, a tank-mix formulation for foliar or soil application comprises 0.1 to 20%, especially 0.1 to 15 %, of the desired ingredients, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, of the desired ingredients, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, of the desired ingredients, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, of the desired ingredients, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art. The compounds of the present invention are particularly suited for use in soil and seed treatment applications.

In general, the pre-mix compositions of the invention contain 0.5 to 99.9 especially 1 to 95, advantageously 1 to 50 , % by mass of the desired ingredients, and 99.5 to 0.1, especially 99 to 5, % by mass of a solid or liquid adjuvant (including, for example, a solvent such as water), where the auxiliaries (or adjuvant) can be a surfactant in an amount of 0 to 50, especially 0.5 to 40, % by mass based on the mass of the pre-mix formulation.

The invention will now be illustrated by the following Examples.

### Biological examples

### Effect of different fungicide treatments against Panama disease (Fusarium odoratissium) in banana

A banana greenhouse trial was carried out in 2018 to evaluate the efficacy of compounds as defined in any one of embodiments 1 to 13 against *Fusarium odoratissium* (*Fusarium oxysporum f.sp. (forma specialis) cubense* Tropical race 4) in banana.

*Fusarium oxysporum f.sp. cubense* strain and tissue used in this study Isolate Fusarium oxysporum f.sp. cubense Tropical Race 4 (Foc TR4, strain II5) was obtained from the Wageningen University (The Netherlands) and Research collection. Strain was taken from liquid N2 cultures and grown on PDA (potato dextrose agar) plates. After verification by PCR (polymerase chain reaction) analysis, chlamydospores were produced during three months. The chlamydospore density was determined by plating and the spore density was adapted to produce soil in the greenhouse containing 100,000 chlamydospores/gram.

Tissue culture plantlets of banana (Cavendish, Grand Naine) were transferred to small pots containing standard soil (peat 5%, grinding clay granules 41%, garden peat 5%, beam structure 4%, steamed 140 compost 33%) and maintained for two weeks at 28°C and ~100% relative humidity (RH) to acclimatize. Thereafter the relative humidity was reduced to around 90%.

Plants were grown for 3 months during the spring of 2018. They were uprooted and were then infected by re-planting them in 2 liter volume of chlamydospores infested soil. Thereafter the plants were individually drenched with compound 1 (see embodiment 13) or water to avoid dilution or spill over of compound 1 and Foc TR4 chlamydospores. In order to allow the most prolonged incubation time, plants were harvested in October after 20 weeks.

At harvest, the latter were evaluated for Panama disease development.

**Table 1: Treatments carried out.**

| Treatment | | Al Rate (g Al/ha) | Application method | Inoculation |
|---|---|---|---|---|
| 1 | CHECK | -- | --- | -- |
| 2 | CHECK INFECTED | -- | Drench | 100000 chlamydospores /ml |
| 3 | Compound 1 SC 450 | 100 | Drench | 100000 chlamydospores /ml |
| 4 | Compound 1 SC 450 | 200 | Drench | 100000 chlamydospores /ml |

### Assessments:

The infection level was determined by analysing the corm of each plant 20 weeks after transplanting.

| Treatment | | Plants | Infected plants | Average infection level all plants (%) | % efficacy based on disease infection |
|---|---|---|---|---|---|
| 1 | CHECK | 7 | 0 | 0.0 | |
| 2 | CHECK INFECTED | 7 | 6 | 58.0 | 0 |
| 3 | Compound 1 SC 450 | 7 | 3 | 1.4 | 97.59 |
| 4 | Compound 1 SC 450 | 7 | 2 | 0.1 | 99.83 |

### Conclusions:

All but one of the not infected control plants (CHECK) were infected when 100000 chlamydospores/ml was applied. Under these conditions, Compound 1 at 200 g/ha resulted in no visual nor quantifiable infections among the seven plants in this batch.

All treatments with Compound 1 (100 or 200 g/ha) resulted in reduced number of infected plants. This indicates that Compound 1 was capable to reduce strongly the infection of chlamydospore of Foc TR4 in the banana plants. Infected plants treated with Compound 1 showed only low infection levels.

## Claims

1. A method of controlling or preventing infestation of a banana plant by the phytopathogenic microorganism *Fusarium oxysporum f.sp. (forma specialis) cubense* (Foc), comprising applying to a crop of banana plants or the locus thereof, a compound according to formula (Ic) 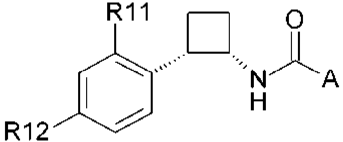 wherein R11, R12 and A are as defined in the following table:
| Compound | A | R11 | R12 |
|---|---|---|---|
| 1 | 2-trifluoromethyl-pyrid-3-yl | Cl | Cl |
| 2 | 3-trifluoromethyl-pyrid-2-yl | Cl | Cl |
| 3 | 3-trifluoromethyl-pyrid-2-yl | F | F |
| 4 | 3-trifluoromethyl-pyrid-2-yl | Cl | F |
| 5 | 3-chloro-pyrid-2-yl | Cl | Cl |
| 6 | 2-methyl-pyrid-3-yl | Cl | Cl |
| 7 | 2-trifluoromethyl-pyrid-3-yl | Cl | F |

2. The method according to claim 1 wherein the method comprises drench application of a compound according to claim 1.

3. Use of a compound as defined in claim 1 for controlling or preventing infestation of a banana plant by the phytopathogenic microorganism *Fusarium oxysporum f.sp. (forma specialis) cubense* (Foc).

4. Use of a compound as defined in claim 1 for controlling or preventing infestation of a banana plant by the phytopathogenic microorganism *Fusarium odoratissimum.*

5. Use according to claim 3 or 4 wherein the use of a compound as defined in claim 1 is a drench application.

## Patentansprüche

1. Verfahren zur Bekämpfung oder zum Verhindern des Befalls einer Bananenpflanze durch den phytopathogenen Mikroorganismus Fusarium oxysporum f.sp. (forma specialis) cubense (Foc), umfassend die Anwendung einer Verbindung gemäß Formel (Ic) auf eine Kultur von Bananenpflanzen oder deren Standort 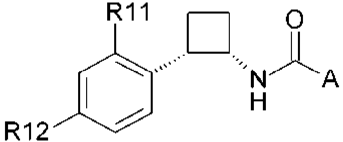 wobei R11, R12 und A wie in der folgenden Tabelle definiert sind:
| Verbindung | A | R11 | R12 |
|---|---|---|---|
| 1 | 2-Trifluormethylpyrid-3-yl | Cl | Cl |
| 2 | 3-Trifluormethylpyrid-2-yl | Cl | Cl |
| 3 | 3-Trifluormethylpyrid-2-yl | F | F |
| 4 | 3-Trifluormethylpyrid-2-yl | Cl | F |
| 5 | 3-Chlorpyrid-2-yl | Cl | Cl |
| 6 | 2-Methylpyrid-3-yl | Cl | Cl |
| 7 | 2-Trifluormethylpyrid-3-yl | Cl | F |

2. Verfahren nach Anspruch 1, wobei das Verfahren eine Tränkanwendung einer Verbindung nach Anspruch 1 umfasst.

3. Verwendung einer wie in Anspruch 1 definierten Verbindung zur Bekämpfung oder zum Verhindern des Befalls einer Bananenpflanze durch den phytopathogenen Mikroorganismus Fusarium oxysporum f.sp. (forma specialis) cubense (Foc).

4. Verwendung einer wie in Anspruch 1 definierten Verbindung zur Bekämpfung oder zum Verhindern des Befalls einer Bananenpflanze durch den phytopathogenen Mikroorganismus Fusarium odoratissimum.

5. Verwendung nach Anspruch 3 oder 4, wobei es sich bei der Verwendung einer wie in Anspruch 1 definierten Verbindung um eine Tränkanwendung handelt.

## Revendications

1. Procédé de lutte ou de prévention contre une infestation d'un végétal de banane par le micro-organisme phytopathogène Fusarium oxysporum f.sp. (forma specialis) cubense (Foc), comprenant l'application sur une culture de végétaux de bananes ou le site de ceuxci, d'un composé selon la formule (Ic) 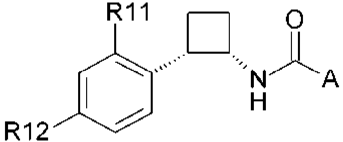 R11, R12 et A étant tels que définis dans le tableau suivant :
| Composé | A | R11 | R12 |
|---|---|---|---|
| 1 | 2-trifluorométhyl-pyridin-3-yle | Cl | Cl |
| 2 | 3-trifluorométhyl-pyridin-2-yle | Cl | Cl |
| 3 | 3-trifluorométhyl-pyridin-2-yle | F | F |
| 4 | 3-trifluorométhyl-pyridin-2-yle | Cl | F |
| 5 | 3-chloro-pyridin-2-yle | Cl | Cl |
| 6 | 2-méthyl-pyridin-3-yle | Cl | Cl |
| 7 | 2-trifluorométhyl-pyridin-3-yle | Cl | F |

2. Procédé selon la revendication 1, le procédé comprenant l'application par bassinage d'un composé selon la revendication 1.

3. Utilisation d'un composé tel que défini dans la revendication 1 pour la lutte ou la prévention contre une infestation d'un végétal de banane par le micro-organisme phytopathogène Fusarium oxysporum f.sp. (forma specialis) cubense (Foc).

4. Utilisation d'un composé tel que défini dans la revendication 1 pour la lutte ou la prévention contre une infestation d'un végétal de banane par le micro-organisme phytopathogène Fusarium odoratissimum.

5. Utilisation selon la revendication 3 ou 4 dans laquelle l'utilisation d'un composé tel que défini dans la revendication 1 est une application par bassinage.
